# EUROPEAN PATENT SPECIFICATION

(11) **EP 0 700 227 B1**
(45) Date of publication and mention of the grant of the patent: **04.12.2002**
(21) Application number: 95306024.1
(22) Date of filing: 30.08.1995
(51) Int. Cl.: H04Q 7/32, H04Q 7/38

(54) **Multi-mode radio telephone**
Multimode-Funktelefon
Radio téléphone multimode

(30) Priority: 02.09.1994 GB 9417661
(43) Date of publication of application: 06.03.1996
(73) Proprietor: Nokia Corporation, 02150 Espoo (FI)
(72) Inventor: Byrne, John Daniel, Shepperton, Middlesex TW17 8HR (GB)
(74) Representative: Haws, Helen Louise

(56) References cited:
- WO-A-93/16549
- WO-A-94/17639
- US-A- 4 989 230
- US-A- 5 127 042
- US-A- 5 301 353

## Description

The present invention relates to a radio telephone, and in particular a radio telephone operable in more than one system, and to a method of operating such a radio telephone.

Over the last ten years there has been a rapid growth in the use and availability of radio telephone systems. As part of this growth there has been a proliferation of different types of radio telephone system, offering the user a variety of services, geographical coverage and cost. Many of these different radio telephone systems cover the same, or a part of the same, geographical area as each other.

Typically, different radio systems, operate on different radio frequencies, utilise different modulation techniques, signalling techniques and intra-system protocols etc. to each other. Thus, a radio telephone designed for one system is generally unable to be used on another system. Thus if a user wishes to have access to more than one system it is necessary to have either more than one radio telephone or a radio telephone capable of operating in more than one system. Having more than one radio telephone is inconvenient for the user. Known radio telephones capable or operating in more than one system typically consist of little more than two separate telephones combined in a single housing. The preference for operating in a particular system is user defined as disclosed in US Patent No 4 989 230.

A particularly useful and appropriate environment for multi-mode radio telephones is the recently available cellular and cordless telephone systems. In the prior art, cordless telephones are typically used in the house and office to allow the user to place and receive calls at any point throughout the house via an RF link with a home base station located within the house or office.

Such cordless telephones are connected via the home base station to the user's telephone landline which is in turn connected to the Public Switched Telephone Network (PSTN). Further, there are known second generation cordless telephone systems such as CT-2 or DECT which are digital systems. Such CT-2 or DECT systems extend beyond conventional domestic operation of cordless telephones by allowing the user to establish an RF link between a CT-2 or DECT radio telephone and a base station in a more publicly accessible location, eg outside the user's home, a railway station, shopping mall or airport. Such base stations are known as telepoint base stations and are linked to the PSTN in much the same way as a home base station. Some cordless (and in particular DECT) radio telephones, are now able to receive calls via telepoint base stations whereas hitherto they were only able to place them. A description of such a system can be found in PCT International Patent Application WO 92/03006. Thus, placing and receiving calls whilst geographically roaming is possible in cordless telephone systems.

However, cordless telephone systems are generally low power systems and each base station provides telecommunications within only approximately a 150 metre radius of the base station, dependent upon the terrain and any man-made objects which could interfere with signalling between a cordless telephone handset and the base station. Such systems are generally only used in areas of high user density and thus tend to be limited to urban areas. This clearly restricts the geographical mobility of a CT-2, DECT or the like cordless telephone user.

In the prior art there are known so-called cellular radio telephone systems having base stations which cover a wide geographical area (cell), eg 35km diameter. However, in urban areas where the user density is high the cells are much smaller and operate at lower powers to facilitate frequency re-use thereby increasing the communication channel density.

Cellular systems have advantages over cordless systems since they allow a user to place and receive calls over a large area. Additionally they are suitable for use in moving vehicles. This is because cellular telephone systems have sophisticated handover procedures to facilitate switching between cells as a user's vehicle crosses from one cell to another. This ensures continuity of service and is particularly important during a call. However, the cost of a cellular telephone call is significantly greater than the cost of a cordless telephone call, since cordless telephone calls are made by way of the user's land line PSTN link and cost the same as landline calls, whilst cellular telephone calls are made by way of expensive cellular base stations and cellular switching equipment and cost much more than land line telephone calls.

In order for a user to be able to utilise both cellular and cordless telephone systems via a single radio telephone handset a so-called cellular cordless telephone (CCT) has been proposed in US Patent US 4 989 230.

WO93/1654 discloses a portable unit which may place and receive calls in cordless and cellular systems. The portable unit, in combination with a cordless base station can automatically route an incoming call to the telephone system in which the portable unit is located. With a radio telephone operable in more than one system it is possible for the telephone whilst operating in one system to lose incoming calls on the other system or systems, a problem which the present invention aims to overcome.

According to the invention there is provided a radio telephone operable in a first and a second radio telephone system, the first system having a localised area of operation, the radio telephone comprising sensing means which, when the radio telephone approaches or enters said localised area of the first system, is operative to automatically transmit to the second system a command which initiates a call forwarding facility, by which calls directed to the telephone in the second system are transferred to the first system, characterised in that the radio telephone is operable to: detect when the radio telephone exits the area of operation of the first system by detecting the proximity of a sensor at an exit from the area of operation of the first system; and, to automatically invoke a supplementary service by which calls in the first system are transferred to the second system in response to the detection.

Said one system may have a plurality of areas of influence and operation, in which case the sensing means are operative to detect the influence of said one system in each area, and to identify which of said areas is being entered or approached so that calls for the telephone can be forwarded to the appropriate area.

In the preferred embodiment, said one system is a cordless telephone system (such as DECT) and the other system is a cellular system (such as GSM), but it will be appreciated that the invention is applicable to radio telephones, operative in any two systems (sometimes called modes).

The radio telephone may be operative, on leaving the area, to transmit a supplementary service message to the other system to cancel the call forwarding facility. Alternatively, the radio telephone may have manually operable means to cancel the call forwarding facility.

By use of the described handset and radio systems, the user can always be reached on his handset whichever radio system has been selected. Moreover, the user can be reached on more than one telephone number with the connectivity associated with a single telephone number.

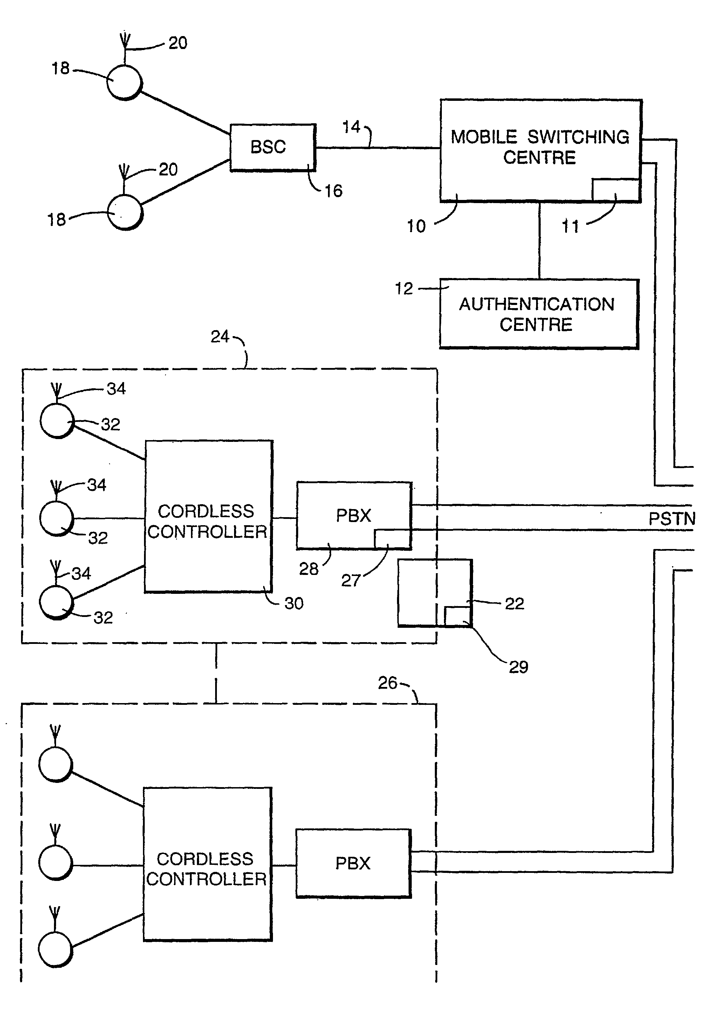

A radio telephone according to the invention, together with the two radio systems in which it is operative, will now be described by way of example with reference to the accompanying drawing the single figure of which is a diagrammatic representation of the two radio systems and the cooperating radio telephone.

Referring to the drawing, a first of the two radio systems is a public cellular system (such as GSM) operating over a wide geographical area. The cellular system has a mobile switching centre (MSC) 10 linked to the Public Switched Telephone Network (PSTN). The MSC 10 is linked to an authentication centre 12 and provides a call forwarding facility indicated at 11. The MSC 10 is connected, normally by a hard-wired link 14, to a base station controller 16 serving a plurality of base transceiver stations 18. Each base transceiver station 18 is connected by hard wiring to the base station controller 16 and has an antenna 20 which transmits radio signals to, and receives radio signals from, a plurality of radio telephones, an exemplary one of which is shown at 22 in the drawing. Each radio telephone 22 is in the form of a portable handset.

The second radio system is a private cordless system (like DECT) and serves a discrete geographical area 24, such as an office. In practice, the cordless system may serve a plurality of discrete areas, such as a number of separate office buildings, and these further discrete areas are indicated by 26 in the drawing. Within each area, the cordless system has a PBX (sometimes called a PABX) 28 connected by hard wiring to the PSTN, the PBX 28 being connected to a cordless controller 30 which in turn is linked to a plurality of radio fixed parts 32, each having an antenna 34. The cordless system has a call forwarding facility in the PBX indicated at 27.

The portable handset 22 is a dual mode handset, ie it is operative in either the cellular or the cordless system, provided the user is within range of an antenna 34. The handset 22 has an aerial for two-way radio communication with the transceiver stations 18 or the radio fixed parts 32. The handset 22 will have allocated to it a telephone number in the cellular system and a different telephone number in the cordless system. The possibility therefore arises of incoming calls on one system failing to reach the user whilst the latter is on the other system. The invention overcomes this by equipping the handset with means which initiate a call forwarding facility.

If the handset 22 is within the large area coverage of the cellular system, the handset will make outgoing calls and receive incoming calls via a suitably adjacent base transceiver station 18 in a conventional way, the PSTN routing incoming calls through the mobile switching centre 10 and the appropriate base transceiver station 18, depending on the location of the handset 22.

Whilst the handset 22 is operative on the cellular system, any calls to the handset 22 on the cordless system are automatically forwarded (via the PSTN) to the cellular system by the call forwarding facility 27 which is able to correlate the users cellular number with his cordless number.

When the user enters the area 24 served by the cordless system, the handset (now in the position shown in the drawing) automatically detects that it is coming within the influence of a cordless system. To achieve this, the handset 22 has sensing means 29 which, when the user approaches or enters the area 24, detect the influence of the cordless system. The handset 22 determines the system identity and locks onto the cordless system. The handset checks the system identity to ensure it has access rights, in DECT this is typically done by checking the PARI (Primary Access Rights Identity) against internally stored identity data.

The handset 22 now needs to acquire cordless system information and this is done either by the handset 22 recovering the PBX phone number from the information stored in the handset, or by the handset obtaining the PBX phone number across the radio interface established between the handset and one of the cordless system antennas 34.

The handset 22 then transmits automatically to the cellular system a command signal which initiates the call forwarding facility 11 in the mobile switching centre 10. So long as the call forwarding facility 11 is extant, all calls emanating from the handset are routed through the PSTN to the PBX 28 and all incoming calls to the handset 22 are routed through the PBX 28. This operative mode continues whilst the handset 22 remains in the area 24 of the cordless system.

When the user leaves the area 24, the cordless mode is lost. At this point the handset automatically sends a supplementary service message to the cellular system to cancel the call forwarding facility 11. Before finally leaving the cordless area 24, the user can manually order the forwarding of any incoming calls on the cordless system to the cellular system, by invoking the call forwarding facility 27.

It will be appreciated that the loss of communication with the cordless system when the handset 22 leaves the area 24 presents special problems in achieving automatic call forwarding. This problem can be overcome by providing special sensors (such as micro cells) at the building exits. As the user approaches an exit to leave the area 24, the proximity of a sensor is detected by the handset which automatically invokes the supplementary service to cause incoming calls on the cordless system to be routed to the cellular system. This automatic operation may be capable of being over-ridden by a manual control on the handset, to cope with a user making a temporary departure from the area and wanting to remain on the cordless system.

## Claims

1. A radio telephone (22) operable in a first (28, 30, 32, 34) and a second (10, 11, 12, 16, 18, 20) radio telephone system, the first system having a localised area of operation (24), the radio telephone comprising sensing means which, when the radio telephone approaches or enters said localised area of the first system, is operative to automatically transmit to the second system a command which initiates a call forwarding facility, by which calls directed to the telephone in the second system are transferred to the first system, **characterised in that** the radio telephone is operable to:
detect when the radio telephone exits the area of operation of the first system by detecting the proximity of a sensor at an exit from the area of operation of the first system; and,
to automatically invoke a supplementary service by which calls in the first system are transferred to the second system in response to the detection.

2. A radio telephone as claimed in claim 1 wherein the first system is a cordless system, and the second system is a cellular system.

3. A radio telephone as claimed in claim 1 or 2 operable to manually override the invocation of the supplementary service by which calls in the first system are transferred to the second system.

4. A radio telephone according to any one of the preceding claims wherein the radio telephone is operable, on leaving the area of operation of the first system, automatically to transmit a supplementary service message to the second system to cancel the call forwarding facility for forwarding calls from the second system to the first system.

## Patentansprüche

1. Funktelephon (22), das in einem ersten (28, 30, 32, 34) und einem zweiten (10, 11, 12, 16, 18, 20) Funktelephonsystem betreibbar ist, wobei das erste System einen räumlich begrenzten Betriebsbereich (24) besitzt, wobei das Funktelephon Erfassungsmittel umfaßt, die, wenn sich das Funktelephon dem räumlich begrenzten Bereich des ersten Systems nähert oder in diesen eintritt, in der Weise arbeiten, daß sie an das zweite System automatisch einen Befehl übertragen, der eine Anrufweiterleitungseinrichtung initialisiert, durch die Anrufe, die zum Telephon im zweiten System gerichtet sind, an das erste System übertragen werden, **dadurch gekennzeichnet, daß** das Funktelephon so betreibbar ist, daß es erfaßt, wenn das Funktelephon den Betriebsbereich des ersten Systems verläßt, indem es die Nähe eines Sensors beim Verlassen des Betriebsbereichs des ersten Systems erfaßt; und in Reaktion auf die Erfassung automatisch einen Zusatzdienst aufruft, durch den Anrufe im ersten System an das zweite System übertragen werden.

2. Funktelephon nach Anspruch 1, bei dem das erste System ein schnurloses System ist und das zweite System ein Zellensystem ist.

3. Funktelephon nach Anspruch 1 oder 2, das so betreibbar ist, daß der Aufruf des Zusatzdienstes, durch den Anrufe im ersten System an das zweite System übertragen werden, manuell unterdrückt werden kann.

4. Funktelephon nach einem der vorhergehenden Ansprüche, wobei das Funktelephon dann, wenn der Betriebsbereich des ersten Systems verlassen wird, so betreibbar ist, daß es automatisch eine Zusatzdienst-Nachricht an das zweite System überträgt, um die Anrufweiterleitungseinrichtung, die Anrufe vom zweiten System zum ersten System weiterleitet, zu sperren.

## Revendications

1. Un radiotéléphone (22) utilisable dans un premier (28, 30, 32, 34) et dans un second (10, 11, 12, 16, 18, 20) système de radiotéléphone, le premier système comportant une zone localisée de fonctionnement (24), le radiotéléphone comprenant un moyen de détection qui, lorsque le radiotéléphone s'approche de ou pénètre dans la dite zone localisée du premier système, est fonctionnel pour transmettre automatiquement au second système une commande qui déclenche une fonctionnalité de renvoi d'appels, par laquelle des appels dirigés vers le téléphone dans le second système sont transférés au premier système,
**caractérisé en ce que** le radiotéléphone est utilisable pour :
détecter lorsque le radiotéléphone sort de la zone de fonctionnement du premier système en détectant la proximité d'un capteur placé à une sortie de la zone de fonctionnement du premier système ; et,
pour automatiquement invoquer un service supplémentaire par lequel des appels dans le premier système sont transférés au second système en réponse à la détection.

2. Un radiotéléphone selon la revendication 1 dans lequel le premier système est un système sans fil, et le second système est un système cellulaire.

3. Un radiotéléphone selon la revendication 1 ou 2 utilisable afin d'annuler manuellement l'invocation du service supplémentaire par lequel des appels dans le premier système sont transférés au second système.

4. Un radiotéléphone selon l'une quelconque des revendications précédentes, dans lequel, au moment de quitter la zone de fonctionnement du premier système, le radiotéléphone est utilisable automatiquement pour transmettre un message de service supplémentaire au second système afin d'annuler la fonctionnalité de renvoi d'appels permettant de transférer des appels du second système au premier système.
